Europäisches Patentamt

European Patent Office

Office européen des brevets

(19)

(11) Veröffentlichungsnummer : **0 088 813**
**B1**

(12) **EUROPÄISCHE PATENTSCHRIFT**

(45) Veröffentlichungstag der Patentschrift :
26.06.85

(21) Anmeldenummer : 82102106.0

(22) Anmeldetag : 16.03.82

(51) Int. Cl.⁴ : **F 16 K 27/04**, F 16 K 31/163,
F 16 B 33/06

(54) Zusatzsteuergerät für ein geschlossenes Hydrauliksystem.

(43) Veröffentlichungstag der Anmeldung :
21.09.83 Patentblatt 83/38

(45) Bekanntmachung des Hinweises auf die Patenterteilung : 26.06.85 Patentblatt 85/26

(84) Benannte Vertragsstaaten :
AT BE CH DE FR GB IT LI NL SE

(56) Entgegenhaltungen :
FR-A- 1 329 546
FR-A- 2 120 970
US-A- 3 056 573
US-A- 3 146 142
US-A- 3 148 591

(73) Patentinhaber : DEERE & COMPANY
1 John Deere Road
Moline Illinois 61265 (US)

(72) Erfinder : Rinne, Fritz
Wilhelm Weihrauch Strasse 10
D-6909 Rauenberg (DE)
Erfinder : Pfefferkorn, Hannsjörg
Adalbert-Stifter-Strasse 2
D-6942 Mörlenbach (DE)

(74) Vertreter : Feldmann, Bernhard et al
DEERE & COMPANY European Office, Patent Department Steubenstrasse 36–42 Postfach 503
D-6800 Mannheim 1 (DE)

## Beschreibung

Die Erfindung betrifft ein Zusatzsteuergerät für ein geschlossenes Hydrauliksystem, insbesondere für eine Hubvorrichtung für Frontanbaugeräte von Traktoren, mit mindestens einem Steuerschieber, dessen Weg ein durch eine Gehäuseöffnung des Zusatzsteuergerätes ragender Gewindestift begrenzt. Siehe z. B. US-A-3 056 573.

Bei Zusatzsteuergeräten der eingangs genannten Art wird der Gewindestift zur Justierung des Steuerschiebers verwandt. Je weiter man den Gewindestift eindreht, desto geringer wird die mögliche Durchflußmenge des von dem Steuerschieber gelenkten Öles. Durch Veränderung dieser Durchflußmenge wird die Geschwindigkeit der verschiedenen, durch das Öl beaufschlagten Funktionen, gesteuert.

Bei den bekannten Zusatzsteuergeräten wird der Gewindestift durch eine Kontermutter gegen unbeabsichtigtes Verstellen gesichert. Siehe z. B. Figur 3 der US-A-3 148 591. Diese Spezialmutter hat gleichzeitig eine Dichtlippe, die das Austreten von Lecköl aus der Gehäuseöffnung verhindert. Die Dichtlippe liegt vorzugsweise in einer Ansenkung des Leichtmetallgehäuses an. Bei der Montage eines Gewindestiftes an einem bekannten Zusatzgerät ist es zwingend notwendig, daß die Kontermutter in der exakten Position angezogen wird. Wird die Mutter nicht fest genug angezogen, so ist die Gehäuseöffnung nicht abgedichtet und es tritt Öl aus. Wird die Mutter zu stark angezogen, so wird das Gewinde im Aluminiumgehäuse zerstört, die Öffnung ist ebenfalls nicht mehr abgedichtet und es tritt Öl aus. In diesem Fall ist ein weiteres Einstellen des Gewindestiftes nicht mehr möglich und das Gewinde muß nachgeschnitten werden.

Gemäß dem weiteren bekannten Stand der Technik wurde zur Abdichtung der Gehäuseöffnung gegenüber austretendem Öl und zur Vermeidung eines selbsttätigen Verstellens des Gewindestiftes ein Dichtmittel an der Gehäuseöffnung aufgetragen, das dichtet und aushärtet. Bei der Verwendung eines derartigen Dichtmittels ist jedoch nachteiligerweise ein weiteres Verstellen des Gewindestiftes nach dem einmaligen Einstellen im Herstellungswerk nicht mehr möglich.

Der aus der US-A-3 056 573 bekannte Gewindestift ist durch Heftschweißen ebenfalls dauerhaft fixiert und weist also denselben Nachteil auf.

Ferner ist es bekannt, zur Sicherung und Dichtung von Schraubverbindungen Schrauben oder andere Gewindeteile auf einem Teil ihres Gewindes mit einer mikroverkapselten Kunststoffbeschichtung zu versehen. Siehe z. B. FR-A-2 120 970. Beim Eindrehen der Schraube bewirkt die Kunststoffschicht einen hohen Reibungsschluß, indem sie die Flanken zwischen der Schraube und dem Muttergewinde fest zusammenpreßt. Außerdem füllt die Kunststoffschicht den axialen Spielraum zwischen Schrauben- und Muttergewinde aus.

Der Erfindung liegt die Aufgabe zugrunde, ein Zusatzsteuergerät der eingangs genannten Art vorzuschlagen, bei dem die Verstellung des Gewindestiftes unter gleichzeitiger Abdichtung der Gehäuseöffnung gegenüber austretendem Öl möglich ist.

Diese Aufgabe wird erfindungsgemäß dadurch gelöst, daß zur Arretierung des in eine bestimmte Position in der Gehäuseöffnung einjustierten verstellbaren Gewindestiftes und zur Abdichtung der Gehäuseöffnung gegenüber austretendem Öl ausschließlich eine zumindest bereichsweise Beschichtung des Gewindes des Gewindestiftes mit einem mikroverkapselten, dauerplastischen Kunststoff vorgesehen ist.

Die Beschichtung des Gewindes des Gewindestiftes mit dem mikroverkapselten, dauerplastischen Kunststoff ermöglicht die Verstellbarkeit des Gewindestiftes, wobei gleichzeitig die Gehäuseöffnung abgedichtet wird. Der Kunststoff ist mikroverkapselt und dauerplastisch. Insbesondere übernimmt dieser Kunststoff gleichzeitig dichtende und hemmende Funktionen, so daß ein unbeabsichtigtes Verstellen des Gewindestiftes ebenfalls verhindert wird. Dank der Hemmwirkung des dauerplastischen Kunststoffes entfällt das Anbringen der Kontermutter. Ein Vorteil dieses erfindungsgemäßen Zusatzsteuergerätes liegt weiterhin darin, daß bei der Montage das Aufschrauben der Kontermutter auf den Gewindestift entfällt. Ferner ist eine einfache Verstellung des Gewindestiftes möglich, ohne daß die Mutter vorher gelöst werden muß. Die Einstellung des Gewindestiftes ist jederzeit möglich und wesentlich zuverlässiger in der Montage als die Einstellung des Gewindestiftes bei bekannten Zusatzsteuergeräten. Ferner besteht keine Gefahr der Zerstörung des Gewindes im Aluminiumgehäuse. Die Einstellung des Steuerschiebers ist wesentlich exakter und in kürzerer Zeit durchführbar. Ein weiterer Vorteil des erfindungsgemäßen Zusatzsteuergerätes besteht darin, daß eine geringere Gehäusewanddicke im Bereich der Einschraubung möglich ist. Die Einschraubtiefe liegt zuverlässig bei etwa 1 × Gewindedurchmesser in einem Aluminiumgehäuse, wobei die normale Einschraubtiefe bei Benutzung einer Stahlschraube in einem Aluminiumgehäuse bei 2 × Gewindedurchmesser liegt.

Die Erfindung wird nun anhand der beigefügten Zeichnung näher erläutert.

Es zeigt:

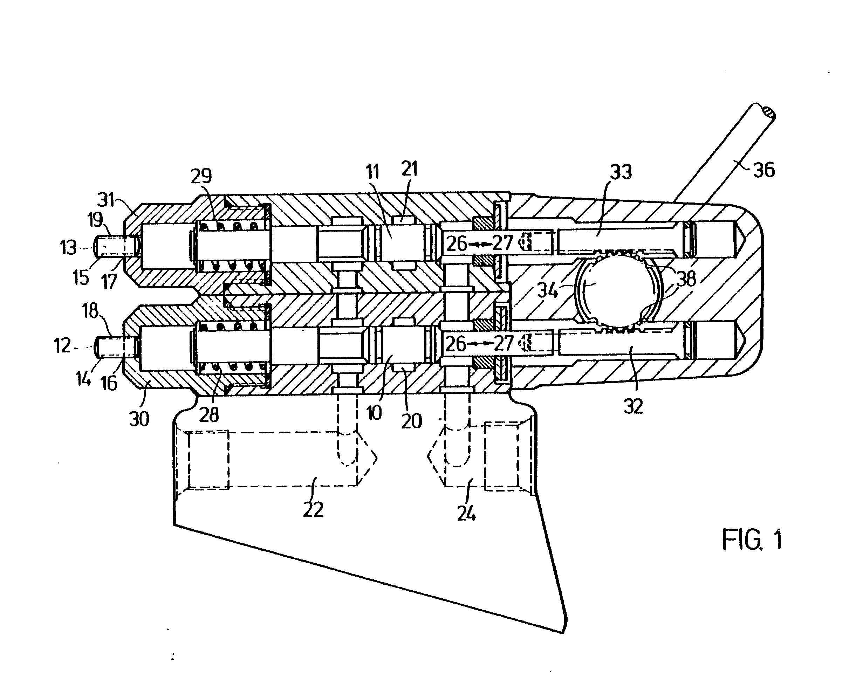

Figur 1 einen Längsschnitt durch ein erfindungsgemäßes Zusatzsteuergerät.

Das in Figur 1 dargestellte Zusatzsteuergerät weist die beiden Steuerschieber 10 und 11 auf. Der Weg des Steuerschiebers 10 bzw. 11 wird durch den Gewindestift 12 bzw. 13 begrenzt. Das eine Ende des Steuerschiebers 10 bzw. 11 ist von der Feder 28 bzw. 29 umgeben, wobei das andere Ende des Steuerschiebers 10 bzw. 11 mit der Zahnstange 32 bzw. 33 verbunden ist. Zwischen der Zahnstange 32 und 33 ist die Betätigungswelle 34 angeordnet. Die Schaltrichtung « Heben-Senken » 26-27 wird bei Betätigung des Bedienungshebels 36 über die Betätigungswelle 34 bewirkt. Ferner weist das dargestellte Zusatzsteuergerät die Ringkanäle 20 und 21 auf und ist mit dem Drucköl 22 und dem Rücklauföl 24 verbunden. Der Gewindestift 12 bzw. 13 ragt durch die Gehäuseöffnung 16 bzw. 17. Diese Gehäuseöffnung 16 bzw. 17 ist in der Federkappe 30 bzw. 31 angeordnet. Das Gewinde 14 bzw. 15 des Gewindestiftes 12 bzw. 13 ist mit der Beschichtung 18 bzw. 19 des mikroverkapselten, dauerplastischen Kunststoffes versehen.

Der Gewindestift 12 bzw. 13 begrenzt den Weg des Steuerschiebers 10 bzw. 11. In dem dargestellten Beispiel ist die Bewegung des Steuerschiebers 10 bzw. 11 in seine äußerste Lage möglich. Wird der Gewindestift 12 oder 13 etwas in der Gehäuseöffnung 16 bzw. 17 gedreht, so ist die Bewegung des Steuerschiebers durch den Anschlag an diesen Gewindestift begrenzt. Betätigt man den Bedienungshebel 36 gemäß Figur 1 nach unten, so dreht sich die Betätigungswelle 34 nach rechts, wobei die beiden Zahnstangen 32 und 33 über die Zähne 38 der Betätigungswelle 34 mitgenommen werden. Hierbei bewegt sich die Zahnstange 33 nach rechts und die Zahnstange 32 nach links. Diese Betätigung der Zahnstangen bewirkt eine Veränderung der Lage der Steuerschieber. Der Steuerschieber 10 bewegt sich somit ebenfalls wie die Zahnstange 32 nach links, wohingegen der Steuerschieber 11 von der Zahnstange 33 nach rechts mitgenommen wird.

Der Weg des Steuerschiebers 10 wird durch den Gewindestift 12 begrenzt. Je weiter man den Gewindestift eindreht, desto geringer ist die mögliche Durchflußmenge, die durch den Steuerschieber bestimmt wird. Durch Veränderung der Durchflußmenge wird die Geschwindigkeit der verschiedenen, durch das Öl beaufschlagten Funktionen, gesteuert.

Zur Auswahl eines geeigneten Kunststoffes ist zu bemerken, daß anaerobe Kleber in Mikrokapseln, wie sie von der Firma Loctite unter dem Handelsnamen « Driloc » angeboten werden, sich besonders bewährt haben. Von Vorteil ist eine Rundum-Beschichtung über den ganzen in Frage kommenden Eindreh-Bereich des Gewindestiftes 12, 13. Eine Änderung der üblichen Gewindetoleranzen ist nicht notwendig, da als Dicke der Beschichtung wenige 1/100 mm genügen. Beim Eindrehen des Gewindestiftes platzen die Mikrokapseln zumindest teilweise auf und der Kunststoff tritt aus, um die erwünschte Festsetzung und Abdichtung des Gewindestiftes 12, 13 zu ermöglichen.

Bezugszeichenliste

10, 11 Steuerschieber
12, 13 Gewindestift
14, 15 Gewinde
16, 17 Gehäuseöffnung
18, 19 Beschichtung

20, 21 Ringkanal für Ölstrom
22 Drucköl
24 Rücklauföl
26, 27 Schaltrichtung « Heben-Senken »
28, 29 Feder
30, 31 Federkappe
32, 33 Zahnstange
34 Betätigungswelle
36 Bedienungshebel
38 Zähne

Patentanspruch

1. Zusatzsteuergerät für ein geschlossenes Hydrauliksystem, insbesondere für eine Hubvorrichtung für Frontanbaugeräte von Traktoren, mit mindestens einem Steuerschieber (10, 11), dessen Weg ein durch eine Gehäuseöffnung (16, 17) des Zusatzsteuergerätes ragender Gewindestift (12, 13) begrenzt, dadurch gekennzeichnet, daß zur Arretierung des in eine bestimmte Position in der Gehäuseöffnung (16, 17) einjustierten verstellbaren Gewindestiftes (12, 13) und zur Abdichtung der Gehäuseöffnung (16, 17) gegenüber austretendem Öl ausschließlich eine zumindest bereichsweise Beschichtungs (18, 19) des Gewindes (14, 15) des Gewindestiftes (12, 13) mit einem mikroverkapselten, dauer-plastischen Kunststoff vorgesehen ist.

Claim

1. An ancillary control device for a closed hydraulic system, in particular for a lifting means for frontmounted equipment on tractors, comprising at least one control spool (10, 11) whose travel movement is restricted by a screwthreaded pin (12, 13) which projects through an opening (16, 17) in the housing of the ancillary control device, characterised in that for the purposes of arresting the adjustable screwthreaded pin (12, 13) when set to a given position in the opening (16, 17) in the housing and for sealing off the opening (16, 17) in the housing with respect to oil issuing therefrom there is exclusively provided an at least regionwise coating (18, 19) of microen-capsulated permanently plastic synthetic resin on the screwthread (14, 15) of the screwthreaded pin (12, 13).

Revendication

1. Appareil de commande additionnel pour système hydraulique fermé, en particulier pour dispositif de relevage pour instruments ou outils portés montés à l'avant de tracteurs, comportant au moins un tiroir de commande (10, 11) dont la course est limitée par un axe fileté (12, 13) faisant saillie à travers un orifice (16, 17) du carter de l'appareil de commande additionnel, caractérisé en ce que, pour le blocage de l'axe fileté (12, 13) déplaçable, réglé dans une position déterminée dans l'orifice (16, 17) du carter, et pour assurer l'étanchéité de l'orifice (16, 17) du carter contre les fuites d'huile vers l'extérieur, il est prévu exclusivement un revêtement au moins partiel ou réalisé dans certaines parties (18, 19) du filetage (14, 15) de l'axe fileté (12, 13), en une matière plastique à plasticité permanente microencapsulée.

FIG. 1

0 088 813